Europäisches Patentamt

European Patent Office

Office européen des brevets

(11) Publication number: **0 457 219 A2**

# EUROPEAN PATENT APPLICATION

(21) Application number: **91107645.3**

(22) Date of filing: **10.05.91**

(51) Int. Cl.5: **G06K 11/16**

(30) Priority: **15.05.90 JP 125051/90**

(43) Date of publication of application:
**21.11.91 Bulletin 91/47**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Morita, Yoshiyuki**
**Seiko Instruments Inc., 31-1, Kameido**
**6-chome**
**Koto-ku, Tokyo(JP)**

(74) Representative: **Fleuchaus, Leo, Dipl.-Ing. et al**
**Melchiorstrasse 42**
**W-8000 München 71(DE)**

(54) **Wireless coordinate reading system.**

(57) An electromagnetic wireless induction type co-ordinate reading system for inputting coordinates to an external device such as a computer comprises a coil which is electromagnetically coupled with loop line groups. A resonator is adapted to resonate with the AC signal generated by an excitation signal generating circuit. The position of the coil is determined by controlling the loop line groups sequentially in order to select one of two adjacent loop lines whereas the other loop line is temporarily selected by a detection scanning circuit. The amplitudes of the signals induced on the individual loop lines are processed arithmetically.

FIG. 1

The present invention relates to a coordinate reading system for inputting coordinates to an external device such as a computer and, more particularly, to an electromagnetic induction type coordinate system applying the electromagnetic induction phenomenon.

[Prior Art]

The coordinate reading system of the prior art is exemplified by our Japanese Patent Laid-Opens Nos. 96825/1977 and 96411/1980.

These coordinate reading systems will be briefly described in the following.

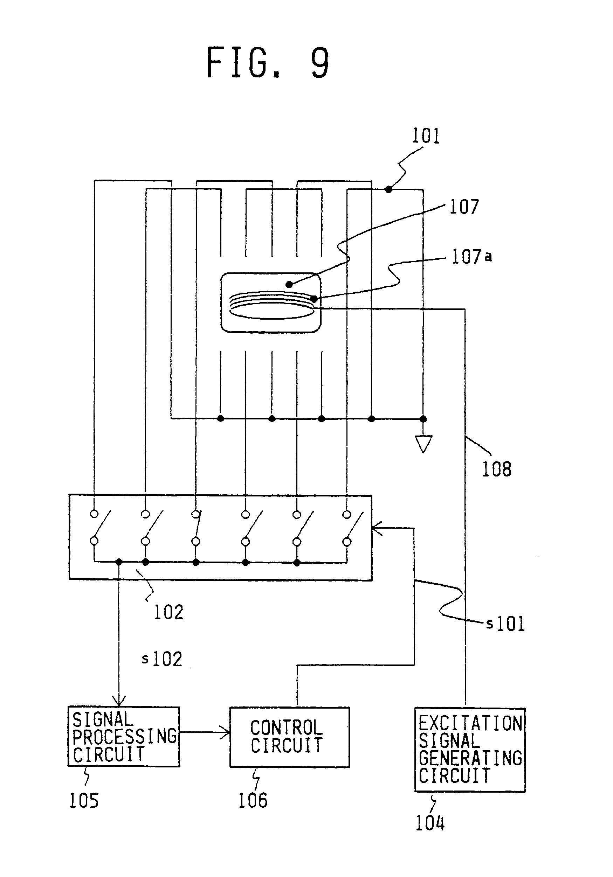

Fig. 9 is a diagram showing the structure of the coordinate reading system of the prior art. In a tablet acting as a coordinate reading plate, there are laid a plurality of sense line groups 101 which have loop shapes. The tablet is not explicitly shown in Fig. 9. The sense line groups are selected one by one by a scanning circuit 102. This scanning circuit 102 has its output connected with a signal processing circuit 105, the output of which in turn is connected with a control circuit 106. This control circuit 106 feeds a scanning signal s101 to select teh aforementioned scanning circuit 102 sequentially. On the other hand, a coordinate indicator 107 has a coil 107a packaged therein and is connected through an excitation signal line 108 with an excitation signal generating circuit 104 which is packaged in the tablet.

With the structure thus made, the coordinate values are calculated in the following manner. The coordinate indiator 107 is placed on the sense line groups 101 and generates an AC magnetic field at all times in response to the signal of the excitation signal generating circuit 104. The control circuit 106 feeds the scanning signal s101 to select the scanning circuit 102 sequentially. Since an inducation current according to the position of the coordinate indicator 107, an induction signal s102 for each sense line is sequentially inputted to the signal processing circuit 105 by selecting the sense line groups 101 with the scanning circuit 102. The signal processing circuit 105 generates an enveloping waveform of those induction signals. The control circuit 106 determines the coordinate values by inputting the amplitudes of the induction signals for the individual sense lines from the enveloping waveform and by comparing the amplitudes arithmetically.

[Problems to Be Solved by the Invention]

In this coordinate reading system of the prior art, however, the AC signal has to be fed to the coordinate indicator so as to generate the magnetic field from the coordinate indicator. For this necessity, the tablet and the coordinate indicator have to be connected through a signal line.

The present invention has been solved to solve the aforementioned problems in the coordinate reading system of the prior art and has an object to provide a wireless coordinate reading system which need not have its coordinate indicator and tablet connected through the signal line.

[Means for Solving the Problems]

In order to solve the aforementioned problems, according to the present invention, the coordinate reading system is constructed to have the following structure.

According to a first structure for achieving one-dimensional coordinate values, there is provided a wireless coordinate reading system comprising: a plurlaity of loop line groups laid at an equal distance from and in parallel with one another in a direction to detect coordinates such that their adjacent ones are partially overlapped one on the other; an excitation signal generating circuit for feeding said loop line grooves with an AC signal; an excitation scanning circuit for selecting one loop line of said loop line groups to connect said loop line with said excitation signal generating circuit; a detection scanning circuit for selecting one loop line of said loop line groups to select a signal on said loop line; a coordinate indicator including: a coil placed on said loop line groups and adapted to be electromagnetically coupled with said loop line groups; and a resonator adapted to resonate with the AC signal generated by said excitation signal generating circuit; a signal processing circuit connected with said detection scanning circuit for processing an induced signal which is induced in said loop line groups by an electromagnetic coupling wiht said coordinate indicator; and a control circuit for determining the coordinates of the position, in which said coordinate indicator is placed, by controlling said loop line groups sequentially such that one of two adjacent loop lines is selected by said excitation scanning circuit whereas the other loop line is temporarily selected by said detection scanning circuit, and by inputting the induced signals, which are induced on the individual loop lines, sequentially from said signal processing circuit to process the amplitudes of said induced signals arithmetically.

According to a second structure for achieving two-dimensional coordinate values, the loop line groups, the excitation scanning circuit and the detection scanning circuit in the first structure are provided in each of the X- and Y-directions of the orthogonal X-Y coordinate system, and the control circuit is constructed in each of the X- and Y-directions.

[Operations]

4. Brief Description of the Drawings

Fig. 1 is a diagram showing the structure of the first embodiment of the coordinate reading system according to the present invention; Fig. 2 is a diagram showing the structure of the signal processing circuit; Fig. 3 is a diagram illustrating the distribution of the induction signal; Fig. 4(a) is a diagram showing the induction signal in case of no coordinate indicator; Fig. 4(b) is a diagram showing the induction signal in case the coordinate indicator is placed; Fig. 5 is a diagram showing the enveloping line signal; Figs. 6(a) to 6(c) are diagrams showing the distributions of the induction signals against the coil position; Fig. 7 is a diagram showing the value Q against the coil position; Fig. 8 is a diagram showing the structure of the second embodiment of the coordinate reading system according to the present invention; and Fig. 9 is a diagram showing the structure of the coordinate reading system of the prior art.

The operations of the first structure will be described in the following.

The control circuit feeds the scanning signals to the excitation scanning circuit and the detection scanning circuit. As a result, the excitation scanning circuit and the detection scanning circuit individually select one loop line. The control circuit feeds the scanning signal such that the loop lines to be selected may be two adjacent ones. One of the loop lines thus selected is connected with the excitation signal generating circuit to generate the AC magnetic field, whereas the other is connected with the signal processing circuit. The loop line thus connected with the signal processing circuit generates the induction signal by the electromagnetic coupling with the loop line for generating the AC magnetic field.

On the other hand, the coordinate indicator is placed on the loop line so as to indicate the position. If this coordinate indicator is placed in the vicinity of the two loop lines selected as above, these two loop lines are more strongly coupled to generate a higher induction signal than that of the case of no coordinate indicator, because this coordinate indicator is made resonant with the excitation signal.

The control circuit selects the loop lines sequentially. Since the loop line at the detection side geneates the induction signal according to the position of the coordinate indicator, the induction signals for the individual loop lines are sequentially inputted to the singal processing circuit. This signal processing circuit geneates the enveloping waveform according to the amplitudes of those induction signals. The control circuit determined the coordinate values by inputting the amplitudes of the induction signals for the individual loop lines from the enveloping waveform and by comparing the amplitudes arithmetically.

[Embodiments]

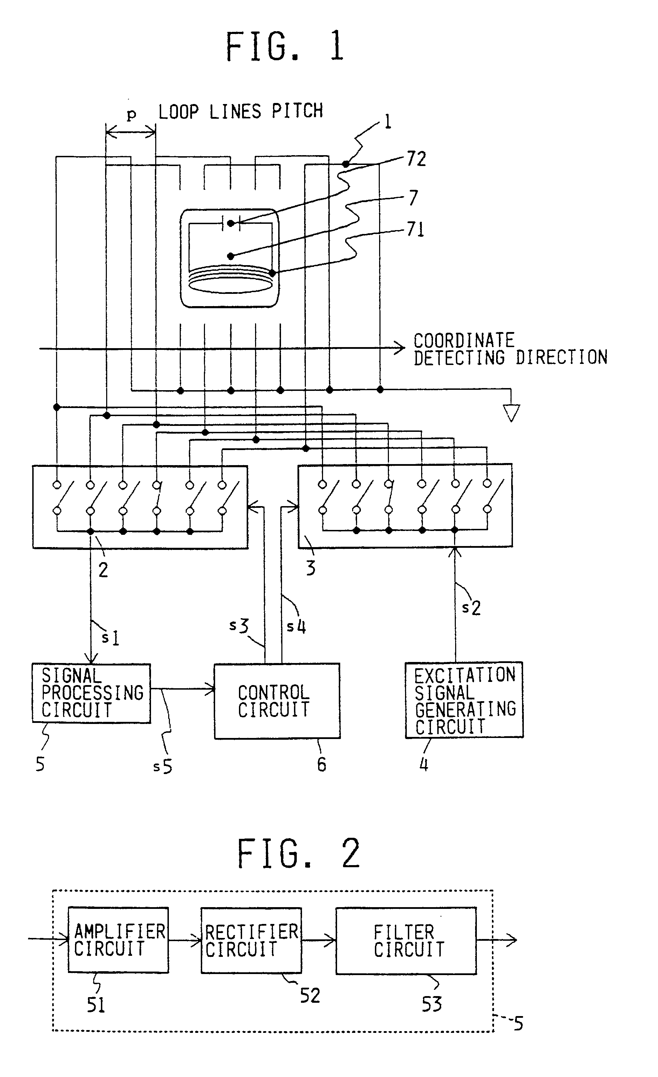

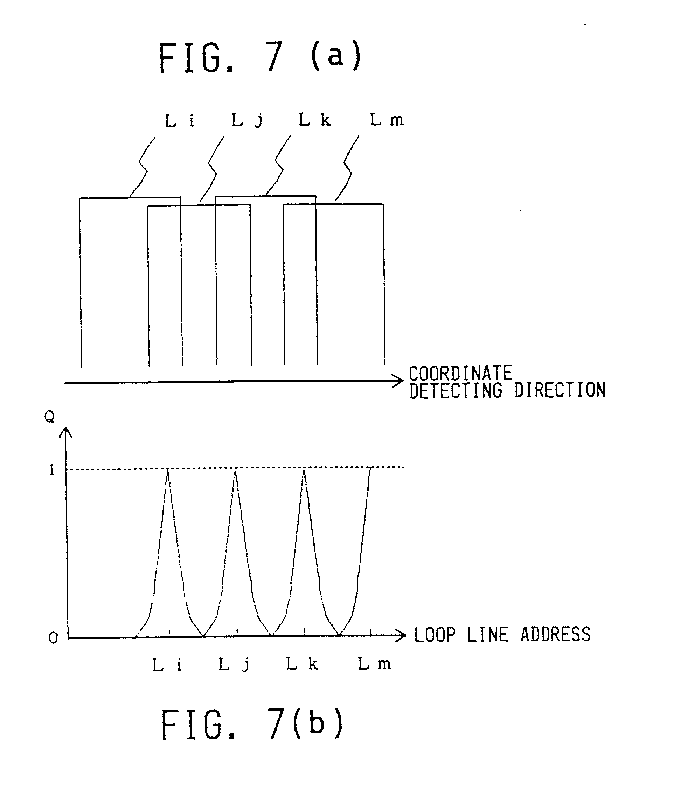

A first embodiment of the present invention will be described in the following with reference to Figs. 1 to 7. This structure is directed to a coordinate reading system for achieving the one-dimensional coordinate values.

Although not explicitly shown, the coordinate reading system is roughly divided into a coordinate reading plate called the "tablet" and a coordinate indicator. This coordinate indicator can be freely moved on the tablet and used to indicate the position, the coordinate values of which are to be read out.

(Structure of the Cordinate Reading System)

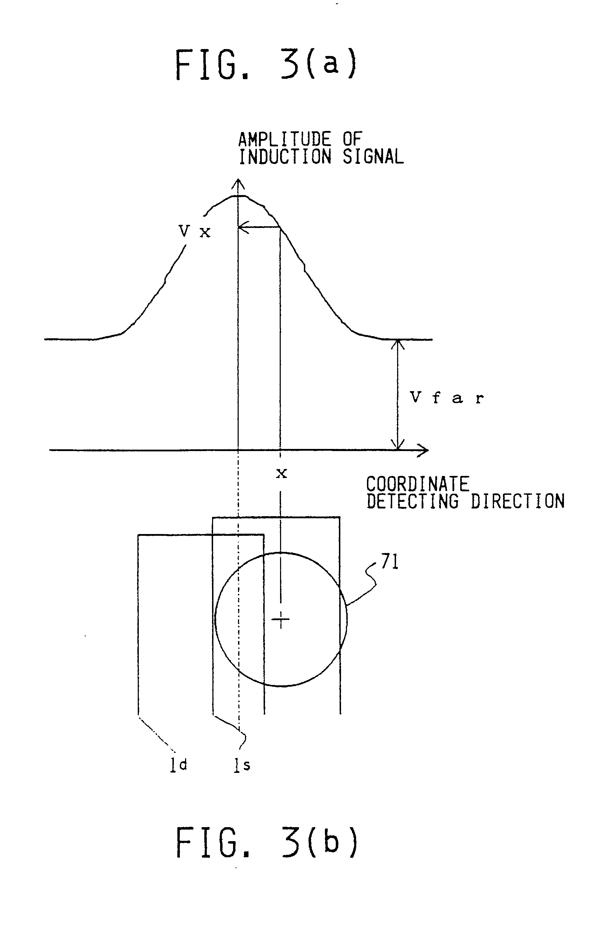

First of all, the structure will be described in the following. Figs. 1 and 2 are diagrams showing the structure of the coordinate reading system according to the present invention.

As shown, reference numeral 1 designates loop line groups. The individual loop lines are laid in the tablet at an equal distance from and in parallel with one another such that their adjacent ones are partially overlapped one on another. The distance between the loop lines is a loop line pitch p. The individual loop lines have their one-side ends connected with one another and grounded to the earth. The other ends are individually connected with a detection scanning circuit 2 and an excitation scanning circuit 3.

The detection scanning circuit 2 and the excitation scanning circuit 3 are composed of a plurality of electronic switch elements such as analog switches, the one-side ends of which are connected with one another to provide a common terminal. In response to a selection signal, one of the switch elements is closed to connect the one-side ends with the common terminal.

The detection scanning circuit 2 and the excitation scanning circuit 3 have their individual terminals connected with the individual loop lines of the aforementioned loop line groups 1. Moreover, the common terminal of the detection scanning circuit 2 is connected with the input of a signal processing circuit 5.

The structure of the signal processing circuit 5 is shown in Fig. 2. This signal processing circuit 5 is composed of an amplifier circuit 51, a rectifier circuit 52 and a filter circuit 53. The signal processing circuit 5 functionally generates the enveloping line of the input signals and can have a structure different from that shown in Fig. 2. It is conceivable to change the arrangement of the amplifier circuit or to provide a plurality of amplifier cirucits by considering the S/N ratios, for example, but the structure is essentially identical to that of Fig. 2.

The excitation scanning circuit 3 has its common terminal connected with an excitation signal generating circuit 4. This circuit 4 an excitation signal s2 or an AC signal to the loop line which is selected by the excitation scanning circuit 3. The excitation signal s2 is an AC signal of about 614.4 KHz, for example. However, this signal should not have its frequency restricted to that value but may basically generate an electromagnetic induction between the loop lines and a later-described coil.

A control circuit 6 is connected with the detection scanning circuit 2 and the excitation scanning circuit 3 so as to feed them with selection signals. The selection signal to be fed to the detection scanning circuit 2 is the "sense address s3", and the selection signal to be fed to the excitation scanning circuit 3 is called the "drive address s4". The control circuit 6 outputs the sense address s3 and the cessing circuit 5 functionally generates the enveloping line of the input signals and can have a structure different from that shown in Fig. 2. It is conceivable to change the arrangement of the amplifier circuit or to provide a plurality of amplifier cirucits by considering the S/N ratios, for example, but the structure is essentially identical to that of Fig. 2.

The excitation scanning circuit 3 has its common terminal connected with an excitation signal generating circuit 4. This circuit 4 an excitation signal s2 or an AC signal to the loop line which is selected by the excitation scanning circuit 3. The excitation signal s2 is an AC signal of about 614.4 KHz, for example. However, this signal should not have its frequency restricted to that value but may basically generate an electromagnetic induction between the loop lines and a later-described coil.

A control circuit 6 is connected with the detection scanning circuit 2 and the excitation scanning circuit 3 so as to feed them with selection signals. The selection signal to be fed to the detection scanning circuit 2 is the "sense address s3", and the selection signal to be fed to the excitation scanning circuit 3 is called the "drive address s4". The control circuit 6 outputs the sense address s3 and the cessing circuit 5 functionally generates the enveloping line of the input signals and can have a structure different from that shown in Fig. 2. It is conceivable to change the arrangement of the amplifier circuit or to provide a plurality of amplifier cirucits by considering the S/N ratios, for example, but the structure is essentially identical to that of Fig. 2.

The excitation scanning circuit 3 has its common terminal connected with an excitation signal generating circuit 4. This circuit 4 an excitation signal s2 or an AC signal to the loop line which is selected by the excitation scanning circuit 3. The excitation signal s2 is an AC signal of about 614.4 KHz, for example. However, this signal should not have its frequency restricted to that value but may basically generate an electromagnetic induction between the loop lines and a later-described coil.

A control circuit 6 is connected with the detection scanning circuit 2 and the excitation scanning circuit 3 so as to feed them with selection signals. The selection signal to be fed to the detection scanning circuit 2 is the "sense address s3", and the selection signal to be fed to the excitation scanning circuit 3 is called the "drive address s4". The control circuit 6 outputs the sense address s3 and the drive address s4 with a difference of 1. Specifically, two adjacent loop lines are simultaneously selected, and one is connected with the signal processing circuit 5 to provide the detection loop line whereas the other is connected with teh excitation signal generating circuit 4 to provide the excitation loop line.

The control circuit 6 is further fed with an enveloping line signal s5 from the signal processing circuit 5. This input unit is an A/D covnerter for reading the voltage value of the enveloping line signal s5 as a digital quantity.

A coordinate indicator 7 is composed of a coil 71 and a capacitor 72 to constitute a parallel resonant circuit. The resonant frequency is equal to that of the excitation signal s2 which is generated by the excitation signal generating circuit 4.

(Operations of the Coordinate Reading System - Signal Processing)

Next, the operations will be described in the following.

The control circuit 6 feeds the excitation scanning circuit 3 with the drive address s4 and connects one of the loop line groups 1 with the excitation signal generating circuit 4. Simultaneously with this, the control circuit 6 feeds the detection scanning circuit 2 with the sense address s3 to connect one of the loop line groups 1 with the signal processing circuit 5. At this time, as has been described hereinbefore, the selected two loop lines, i.e., the detection loop line and the excitation loop line are adjacent to each other.

Here, when the coordinate indicator 7 come close to the selected loop line, the properties of the induction signal to be induced by the detection loop line will be described with reference to Fig. 3. Fig. 3 shows the amplitude of the induction signal which is induced in the detection loop line corresponding to the position of the coil 71 when the coil 71 moves along the coordinate detecting direction.

Now, let the case be considered, in which the coil 71 is apart from the selected loop line. An excitation loop line 1d is connected with hte excitation signal generating circuit 4 by the excitation scanning circuit 3 to generate an AC magnetic field. Since the excitation loop line 1d and a detection loop line 1s are laid in a partially overlapped manner, an induction signal having a constant amplitude Vfar is induced in the detection loop line 1s even without the coil 71. As the coil 71 comes the closer, the amplitude grows the larger and takes the maximum amplitude at the center of the region, in which the excitation loop line 1d and the detection loop line 1s overlap. Fig. 3 shows that the induction signal takes an amplitude Vx when the coil 71 is located at position x. The amplitude of the induction signal contains the information concerning the position, in which the coil 71 is placed. This information is utilized to determine the position by the present coordinate reading system.

The control circuit 6 selects sequentially by the aforementioned method. Usually, the control circuit 6 selects them sequentially one by one in the coordinate detecting direction or in the opposite direction. However, this selecting sequence is not an essential problem. The sequence need not be orderly but may be random. The following description resorts the orderly sequnce in the coordinate detecting direction.

By one selecting operation, one excitation loop line and one detection loop line are selected. Since the detection loop line generates an induction signal depending upon the positional relation to the coil 71, as has been described hereinbefore, the induction signal s1 is sequentially inputted to the signal processing circuit 5 by selecting the loop lines sequentially.

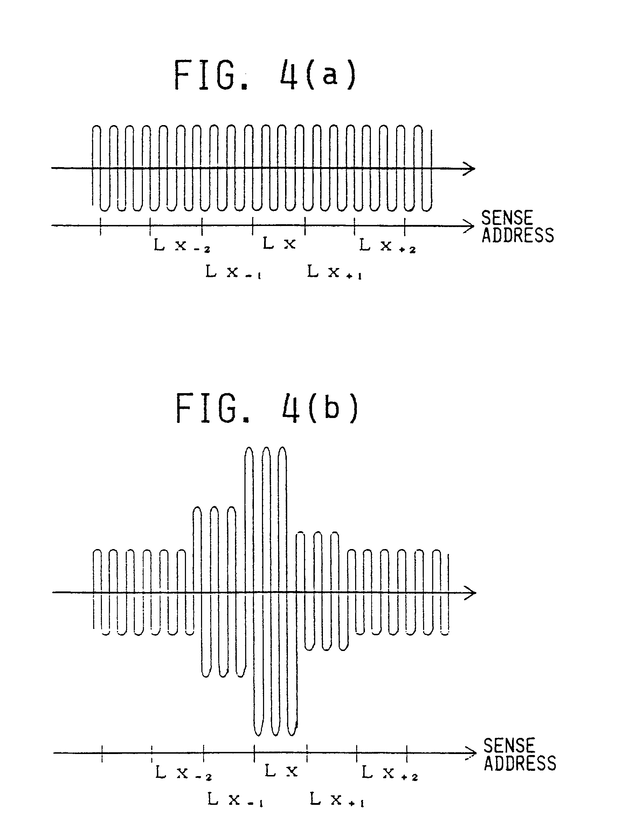

The induction signal s1 to be inputted to the signal processing circuit 5 is illustrated in Fig. 4. Fig. 4(a) is a diagram showing the case, in which the coil 71 is not on the loop line groups 1. This Figure shows that the induction signal s1 having a constant amplitude is generated on each detection loop line because the excitation loop line and the detection loop line are partially overlapped one on the other. If the coil 71 is placed on the loop line groups 1, the induction signal s1 takes the shape shown in Fig. 4(b). In the shown example, it is indicated that the oil 71 is present in the vicinity of the loop line of the sense address Lx.

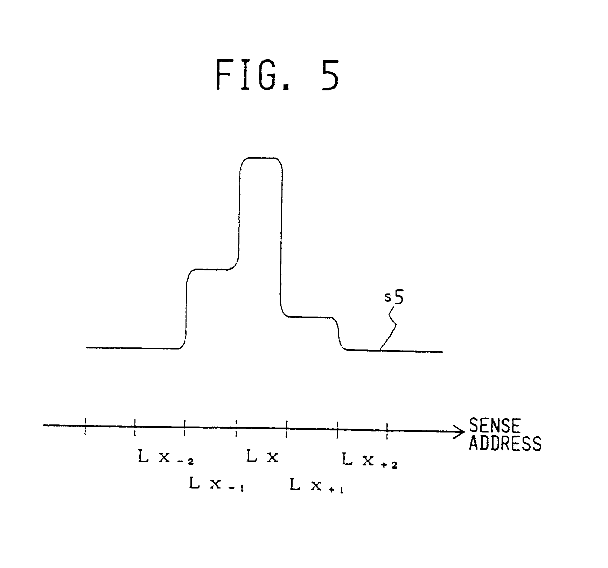

The induction signal s1 is amplified and detected and is converted into an enveloping line by the signal processing circuit 5. As has been described hereinbefore, the signal processing circuit 5 is a traditional AM detecting circuit. The induction signal s1, as shown in Fig. 4(b), is converted into the enveloping line signal s5 shown in Fig. 5.

(Operations of Coordinate Reading System - Calculations of Coordinates)

The method of calculating the coordinates from the enveloping line of the induction signal can be realized by the coordinate reading system of the prior art, such as the method disclosed in Japanese Patent Laid-Open No. 96411/1980, as will be briefly described in the following.

The control circuit 6 receives the enveloping line signal s5 from the signal processing circuit 5 each time the loop line groups 1 are sequentially selected. The input circuit of the control circuit 6 is the A/D converter, as has been described hereinbefore, and the magnitude of the enveloping line signal s5 is inputted in terms of a digital quantity.

The control circuit 6 detects the maximum signal and thesignals of the two adjacent loop lines from the enveloping line signals s5 which are sequentially inputted. The individual signals are coded in the following manner.

$V_p$     the maximum signal called the "peak signal";

$V_{ph}$     the signal on the loop line which is adjacent in the coordinate detecting direction to the loop line having generated the maximum signal; and

$V_{p1}$     the signal on the loop line which is inversely adjacent in the coordinate detecting direction to the loop line having generated the maximum signal.

As to the loop line having generated the maximum signla, its detected address is also stored and called the "peak address", as designated Padrs. The peak address roughly indicates the position in which the coordinate indicator is placed. This makes it possible to detect the position at the unit of the loop line pitch. A finer position is determined by calculating the peak signal and its two adjacent signals.

For this determination, the following value Q is calculated:

$$Q = (V_p - V_{ph})/(V_p - V_{p1}) \quad (1),$$

wherein $V_{ph} > V_{p1}$.
This value Q has the following properties.

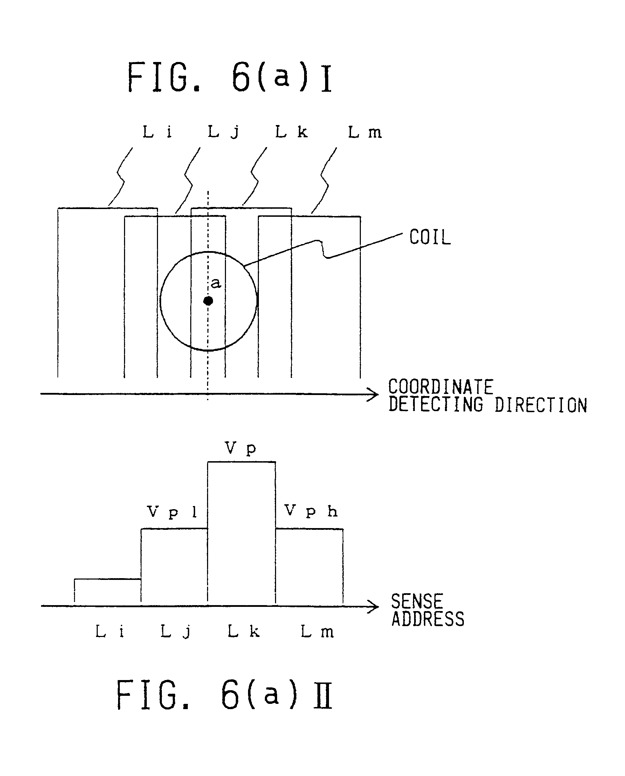

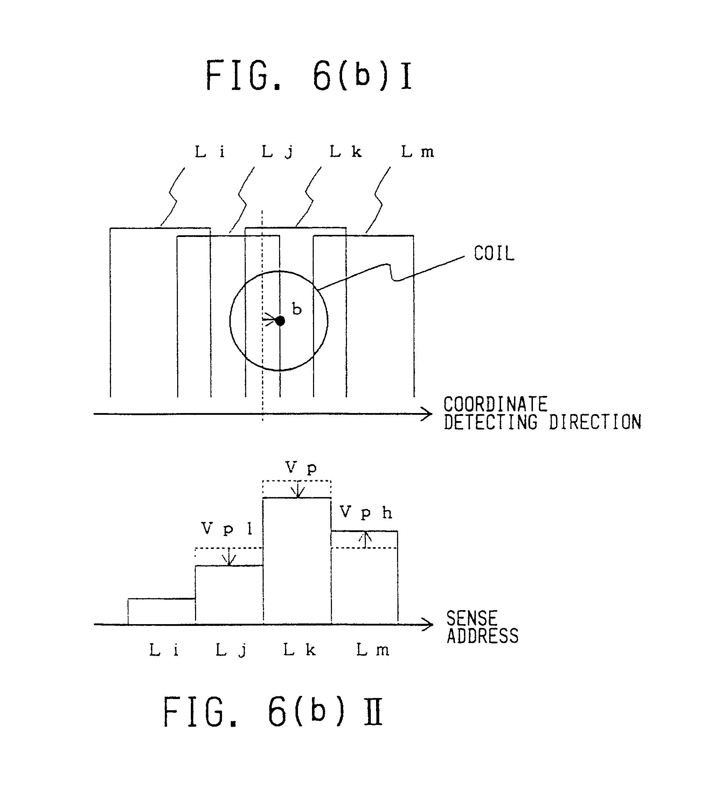

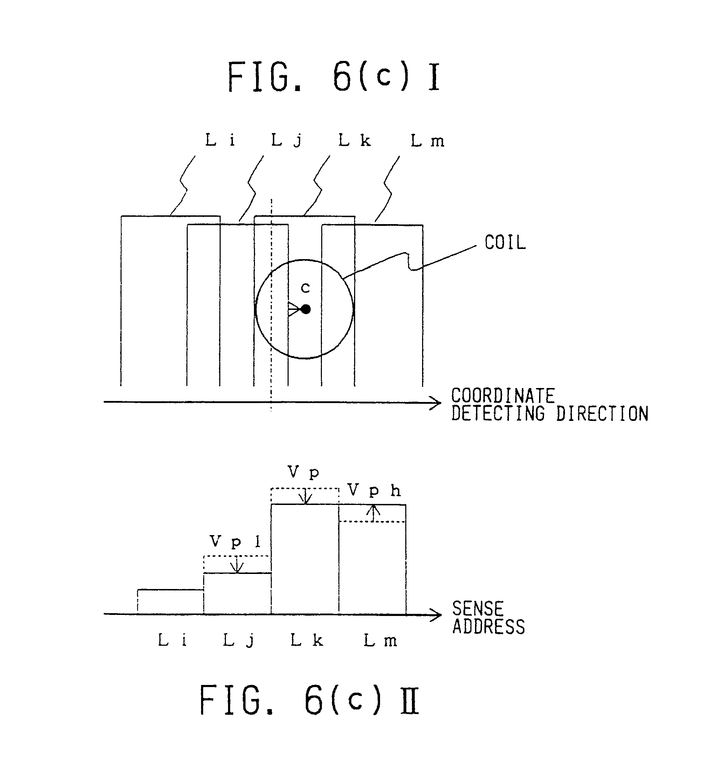

Let it be considered that the coil is placed at a point a, i.e, at the center of the overlapped portion of loop lines Lj and Lk, as shown in Fig. 6(a). Here, letter L* designates a sense address. When the detection scanning circuit 2 and the excitation scanning circuit 3 select the loop line Lj on the excitation loop line and the loop line Lk on the detection loop line, there is established an electromagnetic coupling of Lj - coil - Lk. At this time, the maximum induction signal is generated during the scanning on the detection loop line Lk, and the peak signal Vp is inputted to the control circuit 6. The peak address takes Padrs = Lk. In the selection of one time before, the loop line Li is excited, and the loop line Lj is detected so that an electromagnetic coupling of Li - coil - Lj is established. In this case, the a signal lower than Vp is induced in the loop line Lj, and the signal Vp1 is inputted to the control circuit 6. In the selection of one time after, a loop line Lk is excited, and a loop line Lm is detected so that an electromagnetic coupling of Lk - coil - Lm is established. The signal Vph is inputted to the control circuit 6. In the selections of one time before and after, the effects of the electromagnetic couplings are equal, i.e., Vph = Vp1, although the detail will be omitted. As a result, Q = 1 is obtained from Equation 1.

If the coil moves in the coordinate detecting direction, as shown in Fig. 6(b), the couplings of Li - coil - Lj and Lj - coil - Lk are reduced in accordance with the scanning sequence, but the coupling of Lk - coil - Lm is increased. As a result, the signals Vp and Vp1 are reduced whereas the signal Vph is increased, so that the value Q of Equation 1 takes a value smaller than 1.

When the coil moves more to the position of Fig. 6(c), i.e., one half of the loop line pitch from the position of Fig. 6(a), the value Q takes the minimum. At this time, the effects of the couplings of Lj - coil - Lk and Lk - coil - Lm are equalized so that Vp = Vph and Q = 0.

In case of further leftward movement from the position of Fig. 6(a), the value is determined from Equation 1 by exchanging the signals Vph and Vp1. The changing tendency of the value Q is also identical in this case.

The value Q is between 1 to 0 for each one half pitch of the loop line and coresponds one-to-one to the detailed position between the loop lines. If the characteristics of the value Q are experimentally determined in advance, the detailed position between the loop lines can be determined by determining the value Q from the induction signal.

The coordinate value is determined by adding and subtracting the rough position at the peak address and the detailed position determined herein. The following Equation 2 calculates the coordinates:

$$\text{Coordinate Value} = \text{Padrs} \times p + f(Q) \quad (1);$$

wherein Vph > Vp1. or
$$\text{Coordinate Value} = \text{Padrs} \times p - f(Q);$$
wherein Vph < Vp1.
Here, the codes will be explained again:
Padrs: the peak address;
p: the loop line pitch; and

f(Q): the detailed position corresponding to the value Q and between the loop lines.

(Another Embodiment)

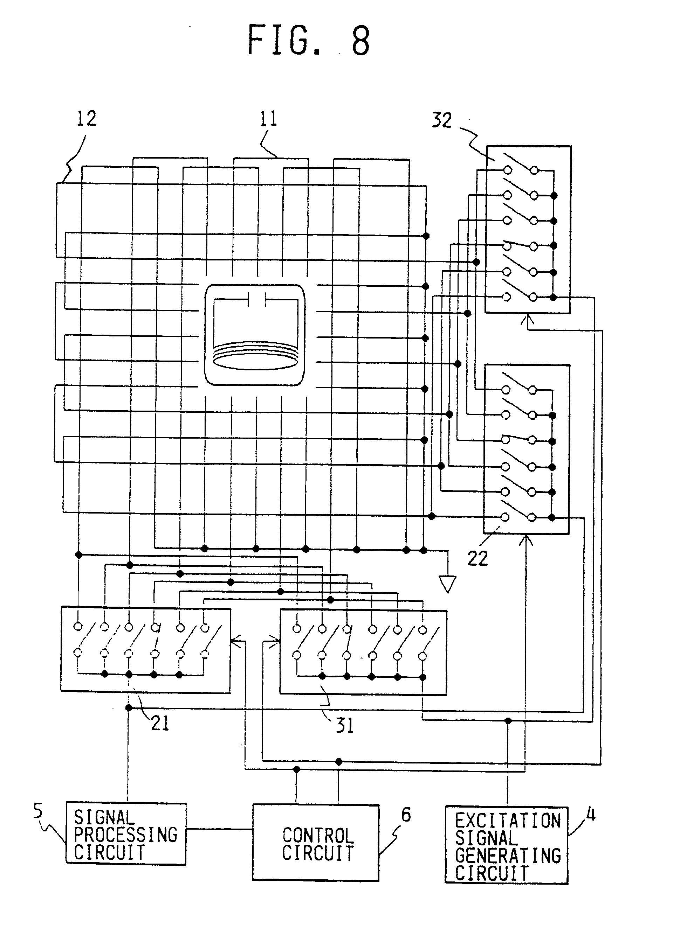

If two sets of loop line groups, excitation scanning circuits and detection scanning circuits are provided and intersected at a right angle, a two-dimensional coordinate reading system can apparently be constructed. Fig. 8 is a diagram showing the two-dimensional coordinate reading system according to the present invention. The structures of an X loop line group 11, an X detection scanning circuit 21 and an x excitation scanning circuit 31, and the structures of a Y loop line group 12, a Y detection scanning circuit 22 and a y excitation scanning circuit 32 are similar to those of the one-dimensional coordinate reading system according to the first embodiment. These components are arranged at a right angle with respect to each other, as shown. The operations will not be explained.

[Effects of the Invention]

As has been described hereinbefore, in the present invention, the position of the coil is determined from the induction signal due to the electromagnetic coupling of the excited loop line - the coil - the detected loop line by switching the loop lines between the excited loop line and the detected loop line. Since no signal is fed to the coil packaged in the coordinate indicator unlike the coordinate reading system of the prior art, it is possible to realize a wireless coordinate reading system which need not connect the coordinate indicator and the tablet through the signal lines.

Claims

1. A wireless coordinate reading system comprising:
    a. a plurlaity of loop line groups laid at an equal distance from and in parallel with one another in a direction to detect coordinates such that their adjacent ones are partially overlapped one on the other;
    b. an excitation signal generating circuit for feeding said loop line grooves with an AC signal;
    c. an excitation scanning circuit for selecting one loop line of said loop line groups to connect said loop line with said excitation signal generating circuit;
    d. a detection scanning circuit for selecting one loop line of said loop line groups to select a signal on said loop line;

e. a coordinate indicator including: a coil placed on said loop line groups and adapted to be electromagnetically coupled with said loop line groups; and a resonator adapted to resonate with the AC signal generated by said excitation signal generating circuit;

f. a signal processing circuit connected with said detection scanning circuit for processing an induced signal which is induced in said loop line groups by an electromagnetic coupling with said coordinate indicator; and

g. a control circuit for determining the coordinates of the position, in which said coordinate indicator is placed, by controlling said loop line groups sequentially such that one of two adjacent loop lines is selected by said excitation scanning circuit whereas the other loop line is temporarily selected by said detection scanning circuit, and by inputting the induced signals, which are induced on the individual loop lines, sequentially from said signal processing circuit to process the amplitudes of said induced signals arithmetically.

2. A wireless coordinate reading system comprising:

a. a plurlaity of loop line groups laid at an equal distance from and in parallel with one another in each of X- and Y- directions of an X-Y orthogonal coordinate system such that their adjacent ones are partially overlapped one on the other;

b. an excitation signal generating circuit for feeding said loop line grooves with an AC signal;

c. an X excitation scanning circuit and a Y excitation scanning cicuit for selecting one loop line of said loop line groups in each of said X- and Y-directions to connect said loop line with said excitation signal generating circuit;

d. an X detection scanning circuit a Y direction scanning circuit for selecting one loop line of said loop line groups in each of said X- and Y-directions to select a signal on said loop line;

e. a coordinate indicator including: a coil placed on said loop line groups and adapted to be electromagnetically coupled with said loop line groups; and a resonator adapted to resonate with the AC signal generated by said excitation signal generating circuit;

f. a signal processing circuit connected with said X detection scanning circuit and said Y direction scanning circuit for processing an induced signal which is induced in said loop line groups by an electromagnetic coupling wiht said coordinate indicator; and

g. a control circuit for determining the X- and Y-coordinates of the position, in which said coordinate indicator is placed, by controlling said loop line groups sequentially such that one of two adjacent loop lines is temporarily selected in each of said X- and Y-directions by said X excitation scanning circuit and said Y-excitation scanning circuit whereas the other loop line is selected by said X detection scanning circuit and said Y ditection scanning circuit, and by inputting the induced signals, which are induced on the individual loop lines, sequentially from said signal processing circuit to process the amplitudes of said induced signals arithmetically.

# FIG. 1

p LOOP LINES PITCH

72
7
71

1

COORDINATE
DETECTING DIRECTION

2
3

s1
s2
s3
s4

SIGNAL
PROCESSING
CIRCUIT

CONTROL
CIRCUIT

EXCITATION
SIGNAL
GENERATING
CIRCUIT

5
s5
6
4

# FIG. 2

AMPLIFIER
CIRCUIT

RECTIFIER
CIRCUIT

FILTER
CIRCUIT

51
52
53
5

# FIG. 3(a)

AMPLITUDE OF
INDUCTION SIGNAL

V x

V f a r

x

COORDINATE
DETECTING DIRECTION

71

I d    I s

# FIG. 3(b)

# FIG. 4(a)

SENSE
ADDRESS

$L x_{-2}$     $L x$     $L x_{+2}$

$L x_{-1}$     $L x_{+1}$

# FIG. 4(b)

SENSE
ADDRESS

$L x_{-2}$     $L x$     $L x_{+2}$

$L x_{-1}$     $L x_{+1}$

# FIG. 5

s5

SENSE
ADDRESS

L x -2     L x     L x +2

L x -1     L x +1

# FIG. 6(a) I

L i    L j    L k    L m

COIL

a

→ COORDINATE
DETECTING DIRECTION

V p

V p l        V p h

→ SENSE
ADDRESS

L i    L j    L k    L m

# FIG. 6(a) II

# FIG. 6(b)I

L i    L j    L k    L m

COIL

b

COORDINATE
DETECTING DIRECTION

V p

V p l

V p h

L i    L j    L k    L m

SENSE
ADDRESS

# FIG. 6(b) II

13

# FIG. 6(c) I

Li　Lj　Lk　Lm

COIL

c

COORDINATE
DETECTING DIRECTION

Vp

Vph

Vpl

Li　Lj　Lk　Lm

SENSE
ADDRESS

# FIG. 6(c) II

# FIG. 7 (a)

Li Lj Lk Lm

COORDINATE
DETECTING DIRECTION

Q

1

O

Li Lj Lk Lm

LOOP LINE ADDRESS

# FIG. 7(b)

# FIG. 8

SIGNAL
PROCESSING
CIRCUIT

CONTROL
CIRCUIT

EXCITATION
SIGNAL
GENERATING
CIRCUIT

# FIG. 9